# EUROPEAN PATENT SPECIFICATION

(11) **EP 2 927 361 B1**
(45) Date of publication and mention of the grant of the patent: **03.08.2016**
(21) Application number: 14163406.3
(22) Date of filing: 03.04.2014
(51) Int. Cl.: D04H 3/004, B29D 99/00, B29C 70/18, B29C 70/20, B29C 70/22, B29C 70/24, D04H 3/115, D04H 3/12

(54) **A fiber mat, a component for a wind turbine, an apparatus for producing the fiber mat and a method for producing the fiber mat.**
Fasermatte, Komponente für eine Windturbine, Vorrichtung zur Herstellung der Fasermatte und Verfahren zur Herstellung der Fasermatte
Mât en fibres, composant pour éolienne, appareil et procédé de production de ce mât en fibres

(43) Date of publication of application: 07.10.2015
(73) Proprietor: Siemens Aktiengesellschaft, 80333 München (DE)
(72) Inventor: Madsen, Steen, 5500 Middelfart (DK); Madsen, Kristian Lehmann, 7000 Fredericia (DK)

(56) References cited:
- EP-A1- 1 842 656
- EP-A1- 2 283 995
- WO-A1-2009/059604
- WO-A1-2014/013137

## Description

A fiber mat, a component for a wind turbine, an apparatus for producing the fiber mat and a method for producing the fiber mat.

The present invention relates to a fiber mat, a component for a wind turbine, an apparatus for producing the fiber mat and a method for producing the fiber mat.

Wind turbine rotor blades are typically made of fiber-reinforced composite material. A rotor blade may be manufactured by laying multiple layers of fiber mats into a mold and subsequently impregnating the fiber mats with a resin. The fiber mats may be impregnated in a so-called vacuum assisted resin transfer molding (VARTM) process. To improve the mechanical and aerodynamic properties of the rotor blades, the rotor blades may be provided with a swept or curved shape as described in US 7,344,360 B2, for example. When manufacturing rotor blades with a swept shape, it may be desirable to lay the fiber mats along a curved path in the mold.

It is one object of the present invention to provide an improved fiber mat for use in the production of a component for a wind turbine, an improved component for a wind turbine, an improved apparatus for producing the fiber mat and an improved method for producing the fiber mat.

Accordingly, a fiber mat for use in the production of a component for a wind turbine, in particular a rotor blade, the component being curved at least in parts, is provided. The fiber mat comprises several rovings being arranged side by side and being connected to one another in at least two connection areas, wherein at least one of the rovings is continuous between the at least two connection areas and wherein at least one of the rovings is discontinuous between the at least two connection areas.

The fiber mat is advantageous in that the fiber mat can be laid along a curved path without producing wrinkles or crinkles at an inner edge of the fiber mat. Since at least some of the rovings are discontinuous, i.e. for example cut or otherwise interrupted, between the connection areas, respective ends of the rovings are free to move closer together or further apart when bending the fiber mat. Preferably, the rovings are configured as unidirectional rovings.

When laying the fiber mat in a curved path, the fiber mat is bent within the same plane in which it substantially extends.

The fiber mat can be impregnated with resin, for example in a VARTM process subsequently to laying it into a mold. Examples of a resin which may be used for impregnating the fiber mat are epoxy, polyester, vinylester or any other suitable thermoplastic or duroplastic material.

"Cured" or "set" refers to a resin being hardened and/or cross-linked to an extent where the shape of the fiber material impregnated with the resin will not or not change significantly any more.

According to an embodiment, each roving is divided into sections, wherein gaps are provided between the sections of each roving.

Preferably, each roving comprises several sections that are arranged one after another.

According to a further embodiment, each section is connected to at least one of the connection areas.

The connection or joining areas may be formed as by a stitching yarn, a seam or an adhesive (e.g. resin or glue). According to a further embodiment, the gaps are positioned in such a way that the gaps of neighboring rovings are arranged offset.

This means that the gaps of neighboring rovings are not positioned side by side. This prevents the provision of weak areas in the fiber mat.

According to a further embodiment, a size of the gaps is configured to be variable when laying the fiber mat on a curved path.

When laying the fiber mat on a curved path, the size of the gaps is on the one hand increased at rovings that are positioned near an outer edge of the fiber mat and is on the other rand reduced at rovings that are positioned near an inner edge of the fiber mat. In particular, the outer edge has a larger radius of curvature than the inner edge.

According to a further embodiment, the sections of a single roving are configured for moving relative to each other when laying the fiber mat on the curved path.

This further prevents wrinkles in the fiber mat.

According to a further embodiment, the connection areas comprise stitching yarns.

The stitching yarns may be made of a plastic material, for example. "Stitching yarns" are to be understood in a broad sense, preferably also to include threads, fibers or other textile material joining the rovings together.

According to a further embodiment, the rovings are made of glass fibers.

Alternatively the rovings may be made of carbon fibers, aramid fibers or the like.

Further, a component for a wind turbine, in particular a rotor blade, the component being curved at least in parts, is provided. The component comprises at least one fiber mat as explained above. The component may comprise a plurality of fiber mats that are arranged on top of each other. The fiber mats are arranged such that the gaps between the sections of the rovings are positioned offset. The plurality of fiber mats may be placed in a mold. Subsequently to arranging the fiber mats in the mold they may be impregnated with a resin in a VARTM process. Also, pre-impregnated mats may be used.

Further, an apparatus for producing a fiber mat for use in the production of a component for a wind turbine, in particular a rotor blade, the component being curved at least in parts, is provided. The apparatus comprising a connection unit for connecting several rovings being arranged side by side in at least two connection areas and a cutting unit for cutting the rovings such that at least one of the rovings is continuous between the at least two connection areas and that at least one of the rovings is discontinuous between the at least two connection areas. Preferably, the cutting or chopping unit is able to chop the rovings such that gaps between sections of the rovings are arranged offset.

According to an embodiment, the connection unit is a stitching unit for stitching the rovings together in the at least two connection areas.

Alternatively, the connection unit may be a bonding unit for applying adhesive, e.g. glue or resin, to the fiber mat.

Further, a method for producing a fiber mat for use in the production of a component for a wind turbine, in particular a rotor blade, the component being curved at least in parts, is provided. The method comprising the steps: a) arranging several rovings side by side; b) connecting the rovings in at least two connection areas; c) cutting the rovings such that at least one of the rovings is continuous between the at least two connection areas and that at least one of the rovings is discontinuous between the at least two connection areas.

The fiber mat or multiple fiber mats may be arranged on a mold surface. In a further step, the fiber mats are injected with a resin, e.g. in a VARTM-process. After curing or setting of the resin, the formed component may be removed from the mold.

According to an embodiment, when placing the fiber mat in a mold, the rovings are exposed to tension. This prevents the formation of wrinkles in the rovings.

According to a further embodiment the rovings are cut before or after connecting the same to each other (in the connection areas).

"a)", "b)" and "c)" are not to imply a fixed order of the method steps. Rather, the steps a) to c) may be carried out in a different order where appropriate in the mind of the skilled person.

"Wind turbine" presently refers to an apparatus converting the wind's kinetic energy into rotational energy, which may again be converted to electrical energy by the apparatus.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 is a perspective view of a wind turbine according to one embodiment;
Fig. 2 shows a view of a known fiber mat for use in the production of a component for a wind turbine;
Fig. 3 shows another view of the fiber mat according to Fig. 2;
Fig. 4 shows a view of an embodiment of a fiber mat for use in the production of a component for a wind turbine;
Fig. 5 shows another view of the fiber mat according to Fig. 4;
Fig. 6 shows a block diagram of an embodiment of a method for producing a fiber mat for use in the production of a component for a wind turbine; and
Fig. 7 shows a view of an embodiment of an apparatus for producing a fiber mat for use in the production of a component for a wind turbine.

In the Figures, like reference numerals designate like or functionally equivalent elements, unless otherwise indicated.

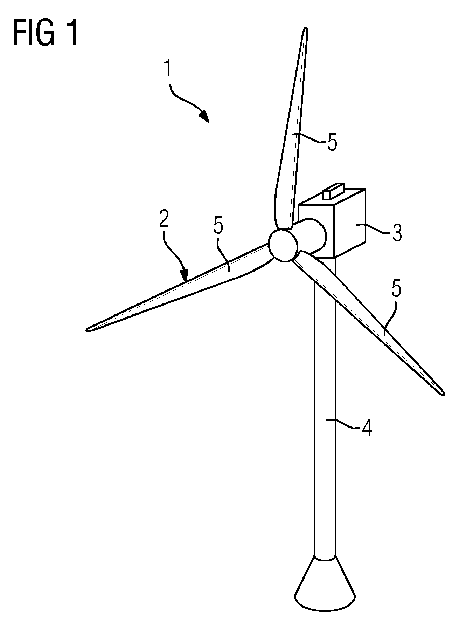

Fig. 1 shows a wind turbine 1 according to an embodiment.

The wind turbine 1 comprises a rotor 2 connected to a generator (not shown) arranged inside a nacelle 3. The nacelle 3 is arranged at the upper end of a tower 4 of the wind turbine 1.

The rotor 2 comprises three blades 5. Rotors 2 of this kind may have diameters ranging from, for example, 30 to 160 meters. The blades 5 are subjected to high wind loads. At the same time, the blades 5 need to be lightweight. For these reasons, blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

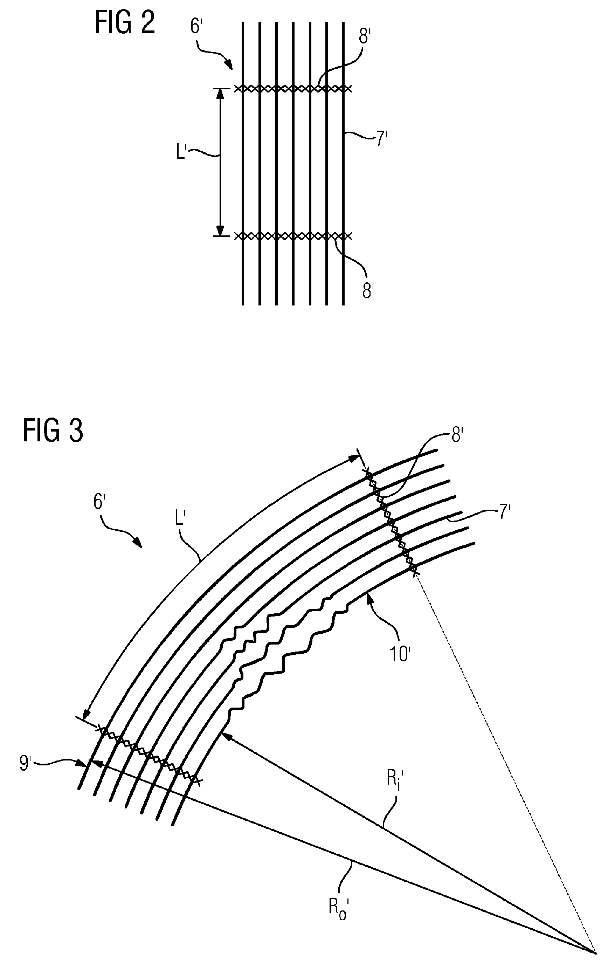

Figs. 2 and 3 each show a known unidirectional fiber mat 6' for producing such a blade 5.

The fiber mat 6' comprises a plurality of unidirectional fibers or rovings 7' that are arranged side by side and that are attached to each other. The rovings 7' can be fixed relative to each other by at least one stitching yarn 8'. A distance between two stitching yarns 8' is designated by the reference numeral L' in Figs. 2 and 3.

To improve the mechanical properties of the blades 5, the blades 5 may have a swept shape. This means that the blades 5 may have a curvature. To produce such a blade 5 with a swept shape it is necessary to lay the fiber mat 6' along a curved path, for example in a curved mold (not shown). Fig. 3 shows the fiber mat 6' being laid in a curved path. Since the rovings 7' are attached to each other by the stitching yarns 8', the rovings 7' provided on an outer edge 9' of the mat 6' are under tension, wherein the rovings 7' provided on an inner edge 10' of the mat 6' are compressed and therefore tend to wrinkle or crinkle. In particular, the rovings 7' provided on the inner edge 10' are bent along a smaller radius Rᵢ' than the rovings 7' provided on the outer edge 9' which are bent along a radius Rₒ'. Since glass fibers are very strong in taking tensile forces in their longitudinal direction but are very sensitive to bending, and may crack when they are exposed to bending, wrinkling or crinkling of the fibers should be avoided.

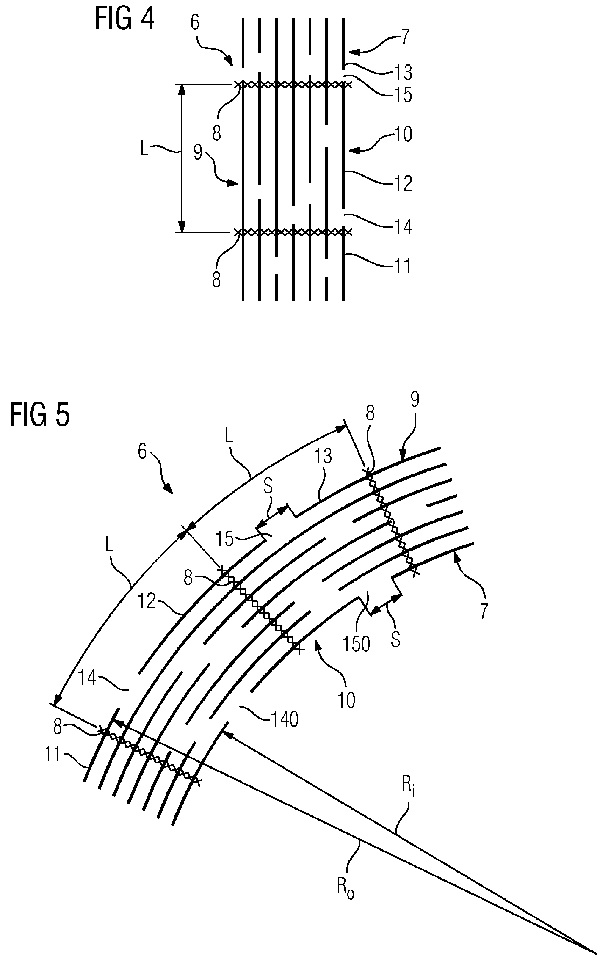

Figs. 4 and 5 each show a unidirectional fiber mat 6 according to an embodiment.

The fiber mat 6 comprises a plurality of unidirectional rovings 7 that are arranged side by side. The rovings 7 may be constituted by glass fibers, carbon fibers, aramid fibers or the like. The rovings 7 are attached to each other by gluing, stitching or sewing. For this reason, the fiber mat 6 comprises for example at least one seam or stitching yarn 8 (forming a connection area). A distance between two stitching yarns 8 is designated by the reference numeral L. Each roving 7 is chopped or cut into at least two sections 11, 12, 13. The number of sections 11, 12, 13 is arbitrary. Each section 11, 12, 13 is connected by at least one of the stitching yarn 8 to a neighboring section 11, 12, 13. Between the sections 11, 12, 13 are provided gaps 14, 15, 140, 150. The gaps 14, 15, 140, 150 of adjacent rovings 7 are arranged offset in the lengthwise direction with respect to each other. That means that gaps 14, 15, 140, 150 of adjacent rovings 7 are arranged in such a way that the gaps 14, 15, 140, 150 are not positioned side by side.

In every fiber mat 6, there is provided at least one roving 7 between two stitching yarns 8 that is not cut. In other words, the uncut roving 7 is continuous between the two stitching yarns 8. As for example shown in Fig. 4, the roving 7 positioned on an outer edge 9 of the mat 6 is not cut between the stitching yarns 8.

When laying the fiber mat 6 down on a curved path as shown in Fig. 5, the size S of the gaps 14, 15 increases since the sections 11, 12, 13 of rovings 7 arranged on the outer edge 9 of the fiber mat 6 are pulled apart to accommodate for the increased length L between adjacent stitching yarns 8. At the same time, the size S of gaps 140, 150 of rovings 7 arranged on an inner edge 10 of the mat 6 remains unchanged or is decreased to accommodate for the reduced length L between adjacent stitching yarns 8. This means, that due to the fact that the rovings 7 of the fiber mat 6 are chopped even when the inner edge 10 has an inner radius Rᵢ that is smaller than an outer radius Rₒ of the outer edge of the fiber mat 6 the development of wrinkles or crinkles at the inner edge 10 is avoided.

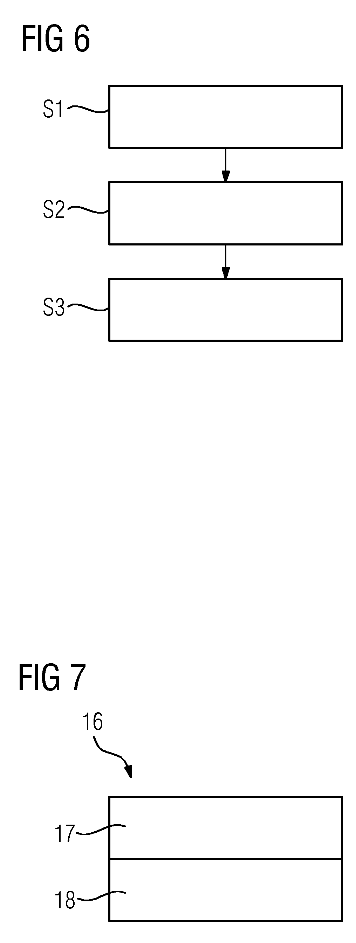

Fig. 6 shows a schematically a block diagram of a method for producing a fiber mat 6 according to Figs. 4 and 5.

The method comprises a step S1 of arranging several rovings 7 side by side. In a step S2, the rovings 7 are stitched together using a stitching yarn 8 or some other material to form a seam. Before or after stitching the rovings 7 together, in a step S3 each roving 7 is cut into sections 11, 12, 13. The rovings 7 are cut in such a way that gaps 14, 15, 140, 150 are provided between sections 11, 12, 13 of the rovings 7. During the application of the fiber mat 6 to a mold, tension may be applied to the rovings 7 to further prevent wrinkling or crinkling thereof.

Fig. 7 shows an apparatus 16 for producing a fiber mat 6 according to Figs. 4 and 5.

The apparatus 16 comprises a connecting unit 17 for connecting the rovings 7 and a unit 18 for cutting or chopping the rovings 7 into sections 11, 12, 13. The unit 17 may be a sewing machine for stitching the rovings together. The chopping unit 18 may be configured to chop the rovings 7 before or after connecting them using the connecting unit 17.

Although the present invention has been described in accordance with preferred embodiments, it is obvious for the person skilled in the art that modifications are possible in all embodiments.

## Claims

1. A fiber mat (6) for use in the production of a component (5) for a wind turbine (1), in particular a rotor blade (5), the component (5) being curved at least in parts, the fiber mat (6) comprising several rovings (7) being arranged side by side and being connected to one another in at least two connection areas (8), wherein at least one of the rovings (7) is continuous between the at least two connection areas (8) and wherein at least one of the rovings (7) is discontinuous between the at least two connection areas (8).

2. The fiber mat of claim 1, wherein each roving (7) is divided into sections (11, 12, 13) and wherein gaps (14, 15, 140, 150) are provided between the sections (11, 12, 13) of each roving (7).

3. The fiber mat of claim 2, wherein each section (11, 12, 13) is connected to at least one of the connection areas (8).

4. The fiber mat of claim 2 or 3, wherein the gaps (14, 15, 140, 150) are positioned in such a way that the gaps (14, 15, 140, 150) of neighboring rovings (7) are arranged offset.

5. The fiber mat of one of claims 2 to 4, wherein a size (S) of the gaps (14, 140, 15, 150) is are configured to be variable when laying the fiber mat (6) on a curved path.

6. The fiber mat of claim 5, wherein the sections (11, 12, 13) of a single roving (7) are configured for moving relative to each other when laying the fiber mat (6) on the curved path.

7. The fiber mat of one of claims 1 to 6, wherein the connection areas (8) comprise stitching yarns (8).

8. The fiber mat of one of claims 1 to 7, wherein the rovings (7) are made of glass fibers.

9. A component (5) for a wind turbine, in particular a rotor blade (5), the component (5) being curved at least in parts, comprising at least one fiber mat (6) in accordance with one of claims 1 to 8.

10. An apparatus (16) for producing a fiber mat (6), in particular the fiber mat (6) of one of claims 1 to 8, for use in the production of a component (5) for a wind turbine, in particular a rotor blade (5), the component (5) being curved at least in parts, the apparatus (16) comprising
a connection unit (17) for connecting several rovings (7) being arranged side by side in at least two connection areas (8) and
a cutting unit (18) for cutting the rovings (7) such that at least one of the rovings (7) is continuous between the at least two connection areas (8) and that at least one of the rovings (7) is discontinuous between the at least two connection areas (8).

11. The apparatus of claim 10, wherein the connection unit (17) is a stitching unit for stitching the rovings (7) together in the at least two connection areas (8).

12. A method for producing a fiber mat (6), in particular the fiber mat (6) of one of claims 1 to 8, for use in the production of a component (5) for a wind turbine, in particular a rotor blade (5), the component (5) being curved at least in parts, the method comprising the steps of
a) arranging (S1) several rovings (7) side by side,
b) connecting (S2) the rovings (7) in at least two connection areas (8), and
c) cutting (S3) the rovings such that at least one of the rovings (7) is continuous between the at least two connection areas (8) and that at least one of the rovings is discontinuous between the at least two connection areas (8).

13. The method of claim 12, wherein, when placing the fiber mat (6) in a mold, the rovings (7) are exposed to tension.

14. The method of claim 12 or 13, wherein the rovings (7) are cut before or after connecting the same to each other.

15. The method of one of claims 12 to 14, wherein the rovings (7) are connected by a stitching yarn (8).

## Patentansprüche

1. Fasermatte (6) zur Verwendung bei der Herstellung einer Komponente (5) für eine Windenergieanlage (1), insbesondere eines Rotorblatts (5), wobei die Komponente (5) zumindest teilweise gekrümmt ist, wobei die Fasermatte (6) mehrere Rovings (7) umfasst, die nebeneinander angeordnet und in mindestens zwei Verbindungsbereichen (8) miteinander verbunden sind, wobei mindestens eines der Rovings (7) zwischen den mindestens zwei Verbindungsbereichen (8) durchgängig und mindestens eines der Rovings (7) zwischen den mindestens zwei Verbindungsbereichen (8) unterbrochen ist.

2. Fasermatte nach Anspruch 1, bei der jedes Roving (7) in Abschnitte (11, 12, 13) unterteilt ist und sich zwischen den Abschnitten (11, 12, 13) jedes Rovings (7) Zwischenräume (14, 15, 140, 150) befinden.

3. Fasermatte nach Anspruch 2, bei der jeder Abschnitt (11, 12, 13) mit mindestens einem der Verbindungsbereiche (8) verbunden ist.

4. Fasermatte nach Anspruch 2 oder 3, bei der die Zwischenräume (14, 15, 140, 150) so positioniert sind, dass die Zwischenräume (14, 15, 140, 150) benachbarter Rovings (7) versetzt angeordnet sind.

5. Fasermatte nach einem der Ansprüche 2 bis 4, bei der eine Größe (S) der Zwischenräume (14, 140, 15, 150) so konfiguriert ist, dass sie variabel ist, wenn die Fasermatte (6) auf eine gekrümmte Strecke gelegt wird.

6. Fasermatte nach Anspruch 5, bei der die Abschnitte (11, 12, 13) eines einzelnen Rovings (7) so konfiguriert sind, dass sie sich in Bezug zueinander bewegen, wenn die Fasermatte (6) auf die gekrümmte Strecke gelegt wird.

7. Fasermatte nach einem der Ansprüche 1 bis 6, bei der die Verbindungsbereiche (8) Heftgarne (8) umfassen.

8. Fasermatte nach einem der Ansprüche 1 bis 7, bei der die Rovings (7) aus Glasfasern hergestellt sind.

9. Komponente (5) für eine Windenergieanlage, insbesondere ein Rotorblatt (5), wobei die Komponente (5) zumindest teilweise gekrümmt ist und mindestens eine Fasermatte (6) gemäß einem der Ansprüche 1 bis 8 umfasst.

10. Vorrichtung (16) zum Herstellen einer Fasermatte (6), insbesondere der Fasermatte (6) nach einem der Ansprüche 1 bis 8, zur Verwendung bei der Herstellung einer Komponente (5) für eine Windenergieanlage, insbesondere eines Rotorblatts (5), wobei die Komponente (5) zumindest teilweise gekrümmt ist, wobei die Vorrichtung (16) Folgendes umfasst:
eine Verbindungseinheit (17) zum Verbinden mehrerer nebeneinander angeordneter Rovings (7) in mindestens zwei Verbindungsbereichen (8) und
eine Schneideinheit (18) zum derartigen Schneiden der Rovings (7), dass mindestens eines der Rovings (7) zwischen den mindestens zwei Verbindungsbereichen (8) durchgängig und mindestens eines der Rovings (7) zwischen den mindestens zwei Verbindungsbereichen (8) unterbrochen ist.

11. Vorrichtung nach Anspruch 10, bei der es sich bei der Verbindungseinheit (17) um eine Hefteinheit zum Zusammenheften der Rovings (7) in den mindestens zwei Verbindungsbereichen (8) handelt.

12. Verfahren zum Herstellen einer Fasermatte (6), insbesondere der Fasermatte (6) nach einem der Ansprüche 1 bis 8, zur Verwendung bei der Herstellung einer Komponente (5) für eine Windenergieanlage, insbesondere eines Rotorblatts (5), wobei die Komponente (5) zumindest teilweise gekrümmt ist, wobei das Verfahren folgende Schritte umfasst:
a) Anordnen (S1) mehrerer Rovings (7) nebeneinander,
b) Verbinden (S2) der Rovings (7) in mindestens zwei Verbindungsbereichen (8) und
c) derartiges Schneiden (S3) der Rovings, dass mindestens eines der Rovings (7) zwischen den mindestens zwei Verbindungsbereichen (8) durchgängig und mindestens eines der Rovings zwischen den mindestens zwei Verbindungsbereichen (8) unterbrochen ist.

13. Verfahren nach Anspruch 12, bei dem die Rovings (7), wenn die Fasermatte (6) in eine Form gelegt wird, Zugspannung ausgesetzt werden.

14. Verfahren nach Anspruch 12 oder 13, bei dem die Rovings (7) geschnitten werden, bevor sie miteinander verbunden werden oder nachdem sie miteinander verbunden worden sind.

15. Verfahren nach einem der Ansprüche 12 bis 14, bei dem die Rovings (7) durch ein Heftgarn (8) verbunden werden.

## Revendications

1. Mat de fibres (6) pour une utilisation dans la production d'un composant (5) pour une éolienne (1), en particulier une pale (5) de rotor, le composant (5) étant incurvé au moins en partie, le mat de fibres (6) comprenant plusieurs stratifils (7) étant agencés côte à côte et étant connectés les uns aux autres dans au moins deux zones de connexion (8), dans lequel au moins un des stratifils (7) est continu entre les au moins deux zones de connexion (8) et dans lequel au moins un des stratifils (7) est discontinu entre les au moins deux zones de connexion (8).

2. Mat de fibres selon la revendication 1, dans lequel chaque stratifil (7) est divisé en sections (11, 12, 13) et dans lequel des espaces (14, 15, 140, 150) sont prévus entre les sections (11, 12, 13) de chaque stratifil (7).

3. Mat de fibres selon la revendication 2, dans lequel chaque section (11, 12, 13) est connectée à au moins une des zones de connexion (8).

4. Mat de fibres selon la revendication 2 ou 3, dans lequel les espaces (14, 15, 140, 150) sont positionnés de telle manière que les espaces (14, 15, 140, 150) de stratifils (7) voisins sont agencés décalés.

5. Mat de fibres selon l'une des revendications 2 à 4, dans lequel une taille (S) des espaces (14, 15, 140, 150) est configurée pour être variable lors du dépôt du mat de fibres (6) sur un chemin incurvé.

6. Mat de fibres selon la revendication 5, dans lequel les sections (11, 12, 13) d'un stratifil (7) unique sont configurées pour se déplacer les unes par rapport aux autres lors du dépôt du mat de fibres (6) sur le chemin incurvé.

7. Mat de fibres selon l'une des revendications 1 à 6, dans lequel les zones de connexion (8) comprennent des fils de couture (8).

8. Mat de fibres selon l'une des revendications 1 à 7, dans lequel les stratifils (7) sont constitués de fibres de verre.

9. Composant (5) pour une éolienne, en particulier une pale (5) de rotor, le composant (5) étant incurvé au moins en partie, comprenant au moins un mat de fibres (6) selon l'une des revendications 1 à 8.

10. Appareil (16) pour produire un mat de fibres (6), en particulier le mat de fibres (6) selon l'une des revendications 1 à 8, pour une utilisation dans la production d'un composant (5) pour une éolienne, en particulier une pale (5) de rotor, le composant (5) étant incurvé au moins en partie, l'appareil (16) comprenant
une unité de connexion (17) pour connecter plusieurs stratifils (7) étant agencés côte à côte dans au moins deux zones de connexion (8) et
une unité de coupe (18) pour couper les stratifils (7) de telle manière qu'au moins un des stratifils (7) est continu entre les au moins deux zones de connexion (8) et qu'au moins un des stratifils (7) est discontinu entre les au moins deux zones de connexion (8).

11. Appareil selon la revendication 10, dans lequel l'unité de connexion (17) est une unité de couture pour coudre les stratifils (7) ensemble dans les au moins deux zones de connexion (8).

12. Procédé de production d'un mat de fibres (6), en particulier le mat de fibres (6) selon l'une des revendications 1 à 8, pour une utilisation dans la production d'un composant (5) pour une éolienne, en particulier une pale (5) de rotor, le composant (5) étant incurvé au moins en partie, le procédé comprenant les étapes de
a) agencement (S1) de plusieurs stratifils (7) côte à côte,
b) connexion (S2) des stratifils (7) dans au moins deux zones de connexion (8), et
c) coupe (S3) des stratifils de telle manière qu'au moins un des stratifils (7) est continu entre les au moins deux zones de connexion (8) et qu'au moins un des stratifils est discontinu entre les au moins deux zones de connexion (8).

13. Procédé selon la revendication 12, dans lequel, lors de la mise en place du mat de fibres (6) dans un moule, les stratifils (7) sont exposés à une tension.

14. Procédé selon la revendication 12 ou 13, dans lequel les stratifils (7) sont coupés avant ou après la connexion de ceux-ci les uns aux autres.

15. Procédé selon l'une des revendications 12 à 14, dans lequel les stratifils (7) sont connectés par un fil de couture (8) .
